# EUROPÄISCHE PATENTSCHRIFT

(11) **EP 0 526 818 B1**
(45) Veröffentlichungstag und Bekanntmachung des Hinweises auf die Patenterteilung: **13.09.1995**
(21) Anmeldenummer: 92112747.8
(22) Anmeldetag: 25.07.1992
(51) Int. Cl.: B29C 37/00, B29C 39/12

(54) **Verfahren zur Herstellung von Gegenständen aus hochgefüllten Giessharzen mit farblich differenzierten Oberflächenbereichen**
Method for the fabrication of articles cast from highly filled resins having a surface with regions of different colours
Procédé pour la fabrication d'objets coulés en résines fortement chargées avec une surface comportant des zones de différentes couleurs

(30) Priorität: 06.08.1991 DE 4126024
(43) Veröffentlichungstag der Anmeldung: 10.02.1993
(73) Patentinhaber: Röhm GmbH, 64293 Darmstadt (DE); BOWIC B.V., NL-9300 AB Roden (NL)
(72) Erfinder: Dijkhuizen, Okko Kornelius, NL-9302 AV Roden (NL); Krieg, Manfred, Dr., W-6100 Darmstadt (DE); Ittmann, Günter, W-6114 Gross-Umstadt (Heubach) (DE)

(56) Entgegenhaltungen:
- EP-A- 0 164 847
- EP-A- 0 217 544
- GB-A- 969 583
- GB-A- 1 076 167
- US-A- 4 221 697

## Beschreibung

### Gegenstand der Erfindung

Die Erfindung betrifft ein verfahren zur Herstellung von Polymerisatformstücken aus hochgefüllten Gießharzen mit farblich differenzierten Oberflächenbereichen, wobei die farblich differenzierte Oberfläche mittels Lackierung in mindestens zwei Schichten erzeugt und fixiert wird.

### Stand der Technik

Bereits im deutschen Patent 693 824 wird beschrieben, daß man farbstoffhaltige Schichten in Polymerisatformstücke, die durch Polymerisation in der Form erzeugt werden, dicht unter der Oberfläche einbetten kann, indem man solche farbstoffhaltigen Schichten, welche ein in den zu polymerisierenden Verbindungen praktisch unlösliches Bindemittel enthalten, auf die Formwandung aufträgt und dann nach Einfüllen der zu polymerisierenden flüssigen Verbindungen die Polymerisation in bekannter Weise durchführt.
Die farbstoffhaltigen Schichten können gleichmäßig oder ungleichmäßig verteilt und unter Anwendung verschiedener farbstoffhaltiger Schichten, z.B. mehrfarbig sein. Vorgesehen ist u.a. auch die Verwendung von (organischen) Lösungsmitteln für die angewendeten Bindemittel. Eine Nachbehandlung wie das Aufbringen einer Deckschicht sei dagegen entbehrlich.

Die DE-A 30 23 964 beschreibt ein Verfahren zur Erzeugung farbmittelhaltiger Zonen in Acryl- und Methacrylharzen in Oberflächennähe im Zuge der Polymerisation der die Harze bildenden Monomeren und Praepolymeren in formgebenden Polymerisationskammern, dadurch gekenzeichnet, daß man zunächst in einem Bindemittel homogen verteilte Farbmittel auf die Wandung der formgebenden Polymerisationskammer als Schicht aufbringt, wobei das Bindemittel im flüssigen Harz bzw. seinen Vorstufen löslich oder zumindest anquellbar ist, und daß man nach Einfüllen der zu polymerisierenden Monomeren und/oder Praepolymeren in an sich bekannter Weise zu Harzen polymerisiert.

Aus dem EP 061 245 ist ein Verfahren zur Bildung eines Formgegenstands bekannt, bei welchem die Zusammensetzung in einer Form ausgehärtet wird, die mindestens zwei Formteile aufweist, welche einen Hohlraum definieren, und bei welchem von der Einführung der härtbaren Zusammensetzung in den Formhohlraum mindestens ein Teil der den Formhohlraum bildenden Oberfläche mit einer Abscheidung aus einem Material versehen wird, das mit der härtbaren Zusammensetzung einen Farbkontrast liefert, wobei die Abscheidung auf Flächen der Form vorgesehen wird, die den Flächen auf dem gehärteten Formgegenstand entsprechen, auf denen ein Farbkontrast gebildet werden soll, dadurch gekennzeichnet, daß die Abscheidung aus mindestens einem feinverteilten Pigment in Mischung mit mindestens einem feinverteilten Füllstoff einer durchschnittlichen Teilchengröße von 100 µm oder weniger besteht und daß das Gemisch als Suspension in einem flüchtigen Trägermaterial aufgebracht wird.

Die EP-A 0 217 544 beschreibt ein Verfahren zur Herstellung von Formteilen aus härtbaren Zusammensetzungen mit Oberflächenbereichen die Farbkontraste aufweisen, wobei eine Form-Oberfläche vor dem Einfüllen der härtbaren Zusammensetzungen mit einem Farbmittel beschichtet bestehend aus a) mindestens 25 Gew.-% eines flüssigen Trägers, der 0 - 100 Gew.-Teile einer polymerisierbaren Flüssigkeit und 100 - 0 Gew.-Teilen einer nicht polymerisierbaren organ. Flüssigkeit b) 0,1 - 10 Gew.-% eines anorganischen Pigments oder 0,0001 - 1 Gew.-% organ. Farbstoffe c) 0 - 60 Gew.-% eines feinverteilten Füllstoffs, d) 0,1 - 50 % eines im Träger a) löslichen, trocknenden Alkydharzes und e) einen in der Flüssigkeit löslichen Polymeren.

### Aufgabe und Lösung

Die Vorgehensweise des Standes der Technik zur Herstellung von Polymerisatformstücken mit farblich differenzierten bzw. kontrastierenden Oberflächenbereichen, wie sie insbesondere im Sanitärgebiet erwünscht sind, konnten nicht in jeder Hinsicht befriedigen.
So waren insbesondere ein besseres Verhalten gegenüber kratzender bzw. reibender Beanspruchung der farbstoffhaltiger Oberflächenschicht sowie verbesserte Farbtiefe anzustreben. Besonderes Augenmerk war auch dem "Water-Whitening"-Effekt (Tendenz zum Ausbleichen unter dem Einfluß von Feuchtigkeit) zu schenken.

Es wurde nun gefunden, daß das Verfahren zur Herstellung von Polymerisatformstücken aus Gießharzen mit farblich differenzierten Oberflächenbereichen gemäß der vorliegenden Erfindung die Forderungen der Technik sehr weitgehend erfüllt.
Die Erfindung betrifft somit ein Verfahren zur Herstellung von Polymerisatformstücken aus hochgefüllten Gießharzen mit farblich differenzierten Oberflächenbereichen bei dem eine Oberfläche des formgebenden Werkzeugs vor dem Verfüllen mit dem Gießharz mit einem härtbaren Überzug einer farbmittelhaltigen Zusammensetzung derartig beschichtet wird, daß farbliche Differenzierung entsteht, bei welchem die Beschichtung in mindestens zwei Lackierungsschritten auf die dafür vorgesehene Oberfläche des Werkzeugs aufgebracht wird, wobei
im ersten Lackierungsschritt eine füllstoffhaltige Lackdispersion L-1 ohne Farbmittelzusatz,
im zweiten Lackierungsschritt ein füllstoff-freier farbmittelhaltiger Lack L-2 (ohne Füllstoffzusatz) und gegebenenfalls in
einem dritten Lackierungsschritt ein füllstoffhaltiger Lack L-1' ohne Farbmittelzusatz aufgebracht wird,
und nach erfolgter Trocknung der Lackschichten das Werkzeug mit dem Gießharz gefüllt, unter Erwärmen polymerisiert und schließlich entformt wird.

Vorzugsweise gehören die Lacke L-1 und L-1' dem gleichen Typus an, bzw. sind identisch. Als Gießharze gemäß der vorliegenden Erfindung werden im Einklang mit dem Stand der Technik flüssige oder durch mäßige Erwärmung verflüssigbare, in Formen vergießbare, härtbare Kunstharze verstanden, bei deren Aushärtung die Polymerisatformstücke gebildet werden.

Einschlägig sehr gut brauchbare Gießharze G bzw. entsprechende Praepolymerisate können dem europ. Patent 218 866 bzw. der US-A 4 786 660 oder den US-A 4 221 697 bzw. US-A 4 251 576 entnommen werden. Vorzugsweise gehören die Gießharze G der Klasse der Acrylharze an, besonders bevorzugt handelt es sich um Polymere auf Basis von Methylmethacrylat, wobei vorteilhafterweise ein Gemisch aus einem Praepolymerisat und den Monomeren zur Anwendung kommt. Vorzugsweise handelt es sich um füllstoffhaltige "gefüllte" Gießharze, insbesondere um hochgefüllte Gießharze, speziell um solche, bei denen die Füllstoffe einen Anteil von 50 - 80 Gew.-% bezogen auf das Gießharz ausmachen.
Als Füllstoffe F eignen sich die einschlägig für Gießharze verwendeten feinteiligen anorganischen oder organischen Materialien. Zweckmäßig wird eine Korngröße von 100 µm Durchmesser, vorzugsweise 50 µm nicht überschritten. Vorzugsweise sollen zweckmäßig mindestens 95 % der Teilchen ≦ 10 µm groß sein. Teilchen mit einer Größe von ≦ 0,1 µm sollen nach Möglichkeit nicht mehr als 10 % der gesamten Teilchenzahl ausmachen. Die Teilchengröße wird gemäß den üblichen Verfahren bestimmt (vgl. B. Scarlett in "Filtration & Separation" pg. 215, 1965). Zur Teilchengrößenbestimmung werden die jeweils größten Abmessungen der Partikel herangezogen. Bevorzugt werden kornförmige Partikel. Gelegentlich kann es vorteilhaft sein, die Partikel durch Erhitzen, etwa auf 150 Grad C, von adsorptiv gebundener Feuchtigkeit zu befreien.
Die Füllstoffe F können Naturprodukte oder synthetisch hergestellt sein. Die mechanischen Eigenschaften wie Härte, elastischer Schermodul bemessen sich nach dem vorgesehenen Anwendungszweck der Gießharze. Dabei kann die Einstellung eines elastischen Schermoduls von wenigstens 5 GNm⁻² vorteilhaft sein. Geeignet sind z.B. Mineralien wie Aluminiumoxide, Aluminiumhydroxide und Derivate z.B. Alkali- und Erdalkalidoppeloxide und Erdalkalihydroxide, Tone, Siliciumdioxid in seinen verschiedenen Modifikationen, Silikate, Aluminosilikate, Carbonate, Phosphate, Sulfate, Sulfide, Oxide, Kohle, Metalle und Metallegierungen. Ferner sind synthetische Materialien wie Glasmehl, Keramik, Porzellan, Schlacke, feinverteiltes synthetisches Si O₂ geeignet. Genannt seien Kieselsäuremodifikationen wie Quarz (Quarzmehl) Tridymit und Cristobalit, sowie Kaolin, Talcum, Glimmer, Feldspat, Apatit, Baryte, Gips, Kreide, Kalkstein, Dolomit. Gegebenenfalls können auch Gemische von Füllstoffen angewendet werden. Der Füllstoffanteil an den Gießharzen beträgt in der Regel mindestens 20 Gew.-%. Im allgemeinen wird ein Anteil von 80 Gew.-% nicht überschritten. Als Richtwert sei ein Füllgehalt der Gießharze von 50 - 80 Gew.-% angegeben. Die Herstellung der Füllstoffe in den zweckmäßigen Korngrößen kann nach den bekannten Verfahren erfolgen z.B. durch Brechen und Mahlen. Besonders bevorzugt ist Cristobalit.

Das erfindungsgemäße Verfahren bedient sich zur Gewinnung der farblich differenzierten Oberflächenbereiche - wie bereits ausgeführt - mindestens einer Zweischrittzweckmäßig einer Dreischrittlackierung.
Im ersten Lackierungsschritt kommt eine füllstoffhaltige Lackdispersion L-1 **ohne Farbmittel** -Zusatz zur Anwendung. Am Aufbau der füllstoffhaltigen Lackdispersion L-1 ist neben der Füllstoffkomponente F', ein polymeres Bindemittel B und eine flüssige Trägerkomponente T beteiligt.

Die Füllstoffkomponente F'entspricht den vorstehend für die Füllstoffe F gemachten Angaben. Hinsichtlich der Wahl des Füllens besteht somit eine relativ weite Option, die zur Optimierung der Eigenschaften ausgenützt werden kann. Vorzugsweise liegt die Teilchengröße im Bereich 30 - 0,5 µm, insbesondere 20 - 1 µm, speziell 10 - 1 µm. Vorzugsweise liegt die Härte (nach Mohs: vgl. Römpp's Chemie-Lexikon 9. Auflage, S. 1700, Georg Thieme Verlag 1990) der Füllstoffe F bei ≧ 6.
Besonders genannt seien Siliciumdioxid in seinen verschiedenen Modifikationen, Silikate, Aluminosilikate sowie Aluminiumoxide, Aluminiumhydroxide und Derivate, insbesondere auch synthetische Materialien wie Glaskügelchen bzw. Glasmehl, Keramik, Porzellan, gegebenenfalls auch Gemische derselben.
Als vorteilhaft hat sich mitunter die Anwendung silanisierter Füllstoffe, wie sie z.T. kommerziell angeboten werden, erwiesen. Solche Silanisierungen können insbesondere mit Methacryloylsilanen, mit Vinylsilanen, Aminosilanen u.ä. durchgeführt sein (vgl. D. Skudelny Kunststoffe 77, 1153 - 1156 (1987) Kunststoffe 68 (1978); Firmenschrift Dynasilan ®, Haftvermittler, der Dynamit Nobel, Chemie). Dem Bindemittel B kann innerhalb der Lackdispersion L-1 die Funktion zugeordnet werden, einerseits den Füllstoff F' zu umhüllen, andererseits die Fixierung des Füllstoffs auf der Werkzeugoberfläche zu unterstützen. Dabei kann mit Erfolg auf einschlägige polymere Bindemittel des Standes der Technik zurückgegriffen werden. (Vgl. H.F. Mark et al. Encyclopedia of Polymer Science & Technology 2nd Ed. Vol.3. pg. 615 - 628, J. Wiley 1985).

Im allgemeinen stehen Füllstoffe F' und Bindemittel B im Verhältnis 1 : 1 bis 20 : 1 Gew.-Teile, vorzugsweise 2 : 1 bis 10 : 1 Gew.-Teile. In erster Näherung lassen sich die in Frage kommenden Bindemittel B einteilen in polymere Binder (B-P) und Reaktive Binder-Systeme (B-R) (vgl. H. Wagner & H.F. Sarx Lackkunstharze, Carl Hanser Verlag, München 1959), welche in der Trägerkomponente T löslich sind. Die polymeren Binder B-P können zweckmäßig derselben Polymerklasse wie die Gießharze selbst angehören. Beispielsweise sind sie ausgewählt aus der Gruppe der Poly(meth)acrylate, insbesondere des Polymethylmethacrylats und seiner Copolymerisate.

Im allgemeinen liegt das Molekulargewicht M̅w der polymeren Binder im Bereich 10 000 - 1 000 000, vorzugsweise im Bereich 100 000 - 500 000 Dalton, wobei das Kriterium der Löslichkeit in der Trägerkomponente T erfüllt sein soll. Das Bindemittel B-P kommt in einem geeigneten Solvens gelöst, vorzugsweise in der Trägerkomponente T zur Anwendung.
Die Anwesenheit der polymeren Binder B-P ist nicht zwingend erforderlich, dagegen bedarf es zur Härtung mindestens eines reaktiven Binder-Systems B-R. Diese Systeme sind insbesondere aus zwei oder mehreren Komponenten aufgebaut, die unter den herrschenden Bedingungen härten. (Vgl. H. Wagner, H.F. Sarx Lackkunstharze loc.cit; Kirk-Othmer, Encyclopedia of Chemical Technology 3rd Ed. Vol. 6, pg. 427 - 445, J. Wiley 1979).
Verwendbare Binder können ausgewählt sein aus der Klasse der Polykondensationsharze, der Polyadditionsharze und der Polymerisationsharze. Genannt seien beispielsweise die Gruppen der
- Alkydharze, insbesondere ölmodifizierte beispielsweise der oxidierten Alkydharze
   Alkydharze plus Diisocyanat
   Alkydharze plus Phenoplast
   Alkydharze plus chlorierten Plasten
   Alkydharze plus Polystyrol
   Alkydharze plus Nitrocellulose
   Alkydharze plus Vinyl- und Epoxyharz
   Alkydharze plus Aminoplasten (plus Epoxyharz)
   Alkydharze plus Silikon
   Ölmodifizierten Epoxyharzen plus Aminoplasten. Der Ölgehalt kann dabei bei 2 0 - 80 Gew.-% liegen.
- Phenoplasten (mit oder ohne Epoxy-, Vinylacetal- oder Aminoplastkomponente)
- Vinylacetale mit oder ohne phenolischer allylaminoplastischer Komponente
- Polyester- und Triazinharze
- Allylpolyester
- Komplexe Aminoharze
- Inden- u. Cumaronharze
Besonders genannt seien Z.B. Bindemittel B-R gebildet aus z.B. einem aromatischen Polyisocyanat (z.B. Handesprodukte vom DESMODUR ®-Typ, Produkte der Fa. Bayer AG und Polyestern oder Polyethern mit freien Hydroxylgruppen (beispielsweise Handelsprodukte vom Typ DESMOPHEN ® der Bayer AG) oder mit Hydroxygruppen-haltigen Acrylharzen (beispielsweise Handelsprodukt JAGOTEX ® F232, Produkt der Fa. Jäger Fabrik chemischer Rohstoffe).
Zu einer dreidimensionalen Vernetzung muß mindestens einer der Reaktionspartner drei oder mehr reaktive Gruppen im Molekül aufweisen. Vorteilhafterweise gibt man noch einen oder mehrere an sich bekannte Katalysatoren, insbesondere Sn- bzw. Zn-Verbindungen, z.B. Salze von Fettsäuren wie z.B. Dibutylzinnlaurat, Zinkoctoat in den üblichen Mengen, beispielsweise im Promillebereich zu.
Die Lacke L-1 bzw. L-2 und L-1' können noch funktionalisierte Monomere wie (Meth)acrylsäure zur Verbesserung der Haftfestigkeit in Anteilen von 1 bis 50 Gew.-% bezogen auf die Bindemittel B-P + B-R enthalten ferner an sich bekannte vernetzende Monomere (vgl. Rauch-Puntigam Acryl- und Methacrylverbindungen, Springer-Verlag 1967), beispielsweise (Meth)acrylsäureester von mehrwertigen Alkoholen (Polyolen) wie Glykoldimethacrylat u.ä. gewöhnlich in Mengen unter 15 Gew.%. Genannt seien als Bindemittel z.B. Kombinationen von Bindern B-P wie Polymethylmethacrylat, gegebenenfalls mit einem Comonomeranteil - meistens < 15 Gew.-% - beispielsweise Methylacrylat, Ethylhexyl(meth)acrylat u.ä. mit einem Binder B-R gebildet, beispielsweise aus einem aromatischen Polyisocyanat (z.B. Handelsprodukt DESMODUR N 75) und einem hydroxylgruppenhaltigen Polyacrylat (Handelsprodukt JAGOTEX F 232). Als Anhalt für die Anwendung seien Gew.-Verhältnis B-P zu B-R von (3 - 2) : 1 angegeben.
Die flüssige Trägerkomponente T im Lack L-1 gewährleistet die Spritzfähigkeit um sich nach einer gewissen, zweckmäßig gewählten (Trocken)zeit zu verflüchtigen.
Die Trägerkomponente T hat demzufolge als Anhalt einen Siedepunkt (unter Normalbedingungen) im Bereich 50 - 220 Grad C, vorzugsweise im Bereich 75 - 170 Grad C. (Allerdings kann gegebenenfalls auch die Kombination aus einer höher siedenden und einer niedersiedenden Komponente zum Ziel führen).

Die Trägerkomponente T kann somit vorteilhaft ausgewählt werden aus der Gruppe bestehend aus
- Monomeren, speziell radikalisch polymerisierbaren, beispielsweise vom Typ der (Meth)acrylsäureester, insbesondere mit C1-C6-Alkylresten, ganz besonders C1 oder C2-Ester (= T-M)
- Lösemittel, beispielsweise vom Typ der (aromat. Kohlenwasserstoffe, der Ketone (= T-L)
Als zusätzliches Auswahlkriterium für die Trägerkomponente T-L kann eine Verdampfungszahl (bezogen auf Ether = 1) von 2 - 100, speziell von 2,5 - 50 herangezogen werden. Die Verdampfungszahl (Verdunstungszahl) ist so definiert als die Zeit, bei der eine bestimmte Menge Lösungsmittel (gewöhnlich 0,3 ml innerhalb 5 sec. aus 10 mm Abstand auf Filterpapier aufgetragen) im Vergleich zu Ethylether verdunstet ist. (Vgl. DIN 53 170; Ullmanns Encyclopädie der Techn. Chemie, 4. Auflage Bd. 16, S. 289, V.C. 1978).

Als Beispiele für die Trägerkomponente T-M seien genannt Methylmethacrylat, Methylacrylat, Ethylmethacrylat, n-Butylmethacrylat u.ä.
Als Beispiele für die Trägerkomponente T-L seien genannt das Butylacetat, Ethoxyethylacetat u.ä.
Als vorteilhaft kann sich eine Kombination aus T-L + T-M erweisen. Im allgemeinen steht die Trägerkomponente T zur Füllstoffkomponente F' im Gewichtsverhältnis 10 : 1 bis 0,5 : 1.
Der im zweiten Lackierungsschritt verwendete farbmittelhaltige Lack L-2 enthält obligatorisch die Trägerkomponente T sowie - im Lack dispergiert oder gelöst - ein oder mehrere Farbmittel FM.

Vorzugsweise enthält der Lack auch Bindemittel B in Form von B-P und/oder B-R.
Der Anteil der Trägerkomponente T am Lack L-2 liegt im allgemeinen im Bereich 40 - 90 Gew.-%, der Anteil des polymeren Bindemittels B-P bei 0 - 20, vorzugsweise 0,5 bis 10, insbesondere 1 - 10 Gew.-%.
Der Anteil des Farbmittels F-M am Lack L-2 liegt gewöhnlich im Bereich 0,1 - 10 Gew.-%, vorzugsweise 1 - 5 Gew.-%.
Eine typische Zusammensetzung für den Lack L-2 kann somit sein:
ca. 67,5 Gew.-Teile Methylmethacrylat
5,5 Gew.-Teile PMMA
2,3 Gew.-Teile Farbmittel
23,0 Gew.-Teile 2-Komponenten-Bindemittel B-R
(beispielsweise JAGOTEX F232/DESMODUR N75im Gew.-Verhältnis ca. 3 : 1).
Als Lösemittel für B-R werden die bereits unter T genannten eingesetzt, beispielsweise Butylacetat, Ethylacetat oder Monomeres wie MMA.
Als Farbmittel F-M kommen die üblicherweise verwendeten Pigmente, gegebenenfalls auch Farbstoffe infrage (vgl. M. & O. Lückert, Pigment- und Füllstofftabellen, Laatzen 1980; H. Batzer, Polymere Werkstoffe Bd. II, S. 337 - 353, Georg Thieme Verlag 1984). Als Weißpigmente seien z.B. solche auf TiO₂- bzw. ZnS-Basis, als Gelb- bzw. Rotpigmente solche auf Eisenoxidbasis, als Schwarzpigmente Schwarzruße, als Blau- bzw. Grünpigmente solche auf Ultramarin bzw. Kobalt-Basis erwähnt.

Zur Herstellung der Lacke L-1 kann beispielsweise so vorgegangen werden, daß man sämtliche Komponenten mit Ausnahme des Bindemittels B-R in der Trägerkomponente T dispergiert, zweckmäßig mit Hilfe eines Dissolvers, sodann wird die Bindemittelkomponente B-R zugesetzt und gelöst. Analog kann auch die Herstellung der Lacke L-2 vorgenommen werden, jedoch verwendet man zweckmäßig ein Dispergier-Aggregat (nach dem Rotor-Stator-Prinzip). Dabei werden die Farbmittel F eindispergiert.
Der gegebenenfalls in einem dritten Lackierungsschritt zur Anwendung kommende Lack L-1' entspricht in seiner stofflichen Zusammensetzung dem Lack L-1; Im allgemeinen wird er mit L-1 identisch sein, jedoch können auch vom jeweiligen Lack L-1 verschiedene Lacke L-1' angewendet werden.

### Durchführung des Verfahrens

Die Durchführung des erfindungsgemäßen Verfahrens setzt die üblichen Formwerkzeuge und Spritzvorrichtungen voraus. Die Modalitäten des Auftrags lassen sich vorteilhaft an einer Metallplatte (beispielsweise an einer vernickelten, hochglanzpolierten Messingplatte) demonstrieren.
Als Temperatur der Wahl für die zum Auftrag vorgesehenen Metallflächen sei 70 Grad C angegeben. Vorgängig empfiehlt sich etwa 30 minütiges Erwärmen, beispielsweise im Trockenschrank bei dieser Temperatur.
Der Auftrag kann mit einer geeigneten Spritzpistole (z.B. Marke SATA Minijet), beispielsweise mit 0,8 mm Düse und einem Druck von 2,5 bar vorgenommen werden.
Vorteilhafterweise erzeugt man die einzelnen Lackschichten durch je zweimaliges Spritzen der Lacke L-1, L-2 und gegebenenfalls L-1' in den dafür vorgesehenen Oberflächenbereichen. Die Lackierung mit den Lacken L-1 bzw. L-1' kann selbstverständlich über die mit dem farbgebenden Lack L-2 beschichteten Oberflächenbereiche hinausgehen. Die Lackierdauer beträgt im allgemeinen 2 - 2,5 Minuten. Unmittelbar nach der letzten Lackierung gibt man den Gegenstand wiederum in die Heizkammer (Trockenschrank) bei 70 Grad C. Innerhalb kurzer Zeit, beispielsweise unterhalb von 5 Minuten erfolgt dann zweckmäßig das Verfüllen mit dem Gießharz G. Das Vorgehen sei anhand eines PMMA/MMA-Gießharzes näher erläutert.
Man stellt beispielsweise innerhalb von ca. 3 Minuten aus der mit der Lackierung versehenen Metallplatte, einer passenden zweiten, unlackierten Metallplatte, (als Anhalt 350 x 350 x 4 mm) und einer Dichtschnur, (beispielsweise PVC-Schnur mit 4 mm Durchmesser) eine Form-Kammer her, in welche man das meist eingefärbte (entgaste) Gießharz aus beispielsweise PMMA/MMA mit wenigstens einem die radikalische Polymerisation auslösenden Initiator, beispielsweise einem Perester wie Bis-(4-tert.butylcyclohexyl)peroxydicarbonat in üblichen Mengen (z.B. 0,5 - 5 Gew.-% bezogen auf die Monomeren) innerhalb kurzer Zeit, beispielsweise ca. 1,5 Minuten verfüllt.
Nach dem Verschließen der Form-Kammer wird zunächst bei erhöhter Temperatur - beispielsweise bei ca. 65 Grad C und im Wasserbad zweckmäßig bei waagrechter Lage der Formkammer und vorteilhaft mit der lackbeschichteten Seite nach unten - während eines Zeitraums von - als Anhalt - 20 Minuten und anschließend bei noch höherer Temperatur, beispielsweise bei 100 Grad C, vorzugsweise im Trockenschrank getempert.

Anschließend kann man die Form-Kammer herausnehmen und bei 60 - 70 Grad C entformen.

### Vorteilhafte Wirkungen

Das erfindungsgemäße Verfahren zeigt im Vergleich mit dem Stand der Technik ein deutlich verbessertes Verhalten gegenüber Abrieb und Verkratzen. Es gelingt mit dem erfindungsgemäßen Verfahren nicht nur die farblich differenzierten Oberflächenbereiche sondern gegebenenfalls die gesamte exponierte Oberfläche zu schützen. Der Farbeindruck der erfindungsgemäß ausgerüsteten Oberflächen ist tiefer und sie zeigen einen höheren Glanz.

Die folgenden Beispiele dienen zur Erläuterung der Erfindung.
Die Bestimmung der reduzierten Viskosität η spec/_{c} erfolgt in Anlehnung zu DIN 1342, DIN 51 562 und DIN 7745.

### BEISPIELE

### Beispiel 1: Lack L-1

In 75 Gew.-Teilen Methylmethacrylat werden 3,5 Teile eines Polymethylmethacrylats mit einem Gehalt von 10 Gew.-% Methylacrylat (M_{w} = ca. 350 000) gelöst und 45 Gew.-Teile silanisiertes Cristobalit (Produkt SILBOND ® 6000 MST der Quarzwertke Frechen) am Dissolver mit ca. 10,0 m/sec 15 Minuten lang dispergiert. In dieser Suspension werden 4,35 Gew.-Teile eines hydroxylgruppenhaltigen Acrylharzes (OH-Gruppengehalt von 3,6 %, 60 %ig im LM-Gemisch Xylol/Solvesso 100/Butylacetat 2 : 1 : 1, Produkt JAGOTEX ® F232 der Fa. E. Jäger, Düsseldorf) und 1,4 Gew.-Teile eines aromatischen Polyisocyanats (75 %-ig in Ethylglycolacetat/Xylol (1 : 1); NCO-Gehalt 16,5 %, Produkt DESMODUR ® N75 der Bayer AG, Leverkusen) gelöst. Dazu gibt man 0,076 Gew.-Teile Dibutylzinndilaurat als Katalysator.

### Beispiel 2: Lack L-2

Herstellung einer braunen Farbpaste
0,7 Gew.Teile Titandioxid, 1,7 Gew.-Teile Eisenoxidrot, 0,06 Gew.-Teile Eisenoxidschwarz werden an einem Rotor-Stator-Dispergator (ULTRATURRAX ®, Fa. Janke & Kunkel, Freiburg in ca. 46 Gew.-Teilen Methylmethacrylat dispergiert, in dem zuvor 5 Gew.-Teile PMMA mit ηspec/_{c} von 50 - 55 cm³/g gelöst worden waren. Man fährt solange fort, bis die Dispersion 55 Grad C erreicht hat. Zu dieser Farbpaste gibt man 21,5 Gew.-Teile Methylmethacrylat, 17,4 Gew.-Teile eines hydroxylgruppenhaltigen Acrylharzes (JAGOTEX F232) und 5,6 Gew.-Teile eines aromat. Polyisocyanats (DESMODUR ® N75) sowie 0,015 Gew.-Teile Dibutylzinndilaurat.

Die Qualität der Beschichtung, die zu farblich differenzierten Oberflächenbereichen führt, kann mit auf den praktischen Gebrauch, beispielsweise im Küchen- und Santitätsbereich, zielenden Testmethoden untersucht werden.
Test auf Abriebfestigkeit/Sandstrahl-Test
Die Qualität der Beschichtung wird mittels einer Druckluft-Sandstrahl-Behandlung (gestrahltes Material "BALLONTINI"-Glasperlen, Strahlgeschwindigkeit = 450 mm/min) festgestellt.
Als Probestücke dienen jeweils herausgesägte Platten von 20 x 10 cm Fläche.
Die Probestücke werden auf einer Fräsbank mit beweglichem Tisch nebeneinander fest eingeklemmt. Die Sandstrahlpistole wird an der Stelle des Fräskopfs fest installiert. Der Tisch wird dann bis zum Anschlag mit dem Gummimantel des Pistolenlaufs hochgefahren. Die Einstellung der Vorrichtung wird während der einzelnen Tests nicht mehr verändert.
Mittels eines Reduzierventils läßt sich die Druckluft variieren. Bei jeder Druckluft-Einstellung wird jeweils ein Strich gezogen.
- Probe I:: Ausführung gemäß EP-B 0 061 245
- Probe II:: Erfindungsgemäße Ausführung, beschichtet mit Lack L-1-1 und Lack L-2-1

Das Gießharz G war in beiden Fällen identisch.

| Ergebnisse: | | |
|---|---|---|
| Druck (bar) | Probe I | Probe II |
| 6 | a | b |
| 5 | a | c |
| 4 | b | c |
| 3 | c | e |
| 2 | d | e |
| 1 | e | e |
| 0,5 | e | e |
| a = Pigment völlig entfernt; starker Glanzverlust b = Pigment teilweise entfernt; Glanzverlust c = Glanzverlust, Pigment intakt d = leichter Glanzverlust e = kein Glanzverlust | | |

## Patentansprüche

1. Verfahren zur Herstellung von Polymerisatformstücken aus Gießharzen mit farblich differenzierten Oberflächenbereichen bei dem eine Oberfläche des formgebenden Werkzeugs vor dem Verfüllen mit dem Gießharz mit einem härtbaren Überzug einer farbmittelhaltigen Zusammensetzung derart beschichtet wird, daß farbliche Differenzierung entsteht,
dadurch gekennzeichnet,
daß die Beschichtung in mindestens zwei Lackierungsschritten auf die dafür vorgesehenen Oberflächenbereiche des Werkzeugs aufgebracht wird, wobei
im ersten Lackierungsschritt eine füllstoffhaltige Lackdispersion L-1 ohne Farbmittelzusatz
im zweiten Lackierungsschritt ein füllstoff-freier, farbmittelhaltiger Lack L-2 aufgebracht wird und nach der Trocknung der Lackschichten, das Werkzeug mit dem Gießharz gefüllt und unter Erwärmen polymerisiert und schließlich entformt wird.

2. Verfahren gemäß Anspruch 1, dadurch gekennzeichnet, daß anschließend an die Trocknung des Lacks L-2 in einem dritten Lackierungsschritt ein füllstoffhaltier Lack L-1' ohne Farbmittelzusatz aufgebracht wird und nach der Trocknung der Lackschichten das Werkzeug mit dem Gießharz gefüllt und unter Erwärmen polymerisiert und schließlich entformt wird.

3. Verfahren gemäß Anspruch 2, dadurch gekennzeichnet, daß der füllstoffhaltige Lack L-1' dem Lack L-1 entspricht.

4. Verfahren gemäß den Ansprüchen 1 und 3, dadurch gekennzeichnet, daß die füllstoffhaltigen Lackdispersionen L-1 neben einer Füllstoffkomponente F' ein polymeres Bindemittel B und eine flüssige Trägerkomponente T enthält.

5. Verfahren gemäß den Ansprüchen 1 und 4, dadurch gekennzeichnet, daß der Lack L-2 mindestens ein Farbmittel FM neben der flüssigen Trägerkomponente T enthält.

6. Verfahren gemäß Anspruch 5, dadurch gekennzeichnet, daß der Lack L-2 noch das Bindemittel B enthält.

7. Verfahren gemäß den Ansprüchen 4 bis 6, dadurch gekennzeichnet, daß die polymeren Binder B ganz oder teilweise aus einem mindestens zwei reaktive Komponenten enthaltenden, härtenden System B-R gebildet werden.

8. Verfahren gemäß den Ansprüchen 4 bis 7, dadurch gekennzeichnet, daß die polymeren Binder B außer aus dem härtenden System B-R noch aus einem polymeren Binder B-P bestehen.

9. Verfahren gemäß Anspruch 8, dadurch gekennzeichnet, daß der polymere Binder P-B ein Homo- oder Copolymerisat des Methylmethacrylats darstellt.

10. Verfahren gemäß den Ansprüchen 1 und 4, dadurch gekennzeichnet, daß die flüssige Trägerkomponente T einen Siedepunkt unter Normalbedingungen im Bereich 50 - 200 Grad C besitzt.

11. Verfahren gemäß Anspruch 10, dadurch gekennzeichnet, daß die flüssige Trägerkomponente T einen Siedepunkt unter Normalbedingungen im Bereich 75 - 170 Grad C besitzt.

12. Verfahren gemäß den Ansprüchen 1 sowie 10 und 11, dadurch gekennzeichnet, daß die Trägerkomponente T ganz oder teilweise aus radikalisch polymerisierbaren Monomeren besteht.

13. Verfahren gemäß Anspruch 12, dadurch gekennzeichnet, daß die Trägerkomponente T ganz oder teilweise aus einem oder mehreren Alkylestern der (Meth)acrylsäure mit 1 bis 6 Kohlenstoffatomen im Alkylrest besteht.

14. Verfahren gemäß Anspruch 12, dadurch gekennzeichnet, daß die Trägerkomponente T ganz oder teilweise aus Methylmethacrylat besteht.

## Claims

1. A process for preparing moulded polymer articles from cast resins, having differently coloured surface regions, in which one surface of the shaping tool, prior to being filled with the cast resin, is coated with a hardenable layer of a colour-containing composition such that a colour differentiation is produced, characterised in that the coating is applied in at least two coating steps onto the surface regions of the tool intended for this purpose, applying, in the first coating step, a varnish dispersion L-1 containing a filler but no added colourant, and, in the second coating step, a filler-free, colour-containing varnish L-2 and that, when the layers of varnish are dry, the tool is filled with the cast resin, the polymerisation is carried out upon heating and finally the mould is released.

2. A process according to claim 1, characterised in that subsequent to the drying of the varnish L-2, a varnish L-1' containing a filler but no added colourant is applied in a third coating step and that, when the layers of varnish are dry, the tool is filled with the cast resin, the polymerisation is carried out upon heating and finally the mould is released.

3. A process according to claim 2, characterised in that the filler-containing varnish L-1' corresponds to varnish L-1.

4. A process according to claims 1 and 3, characterised in that the filler-containing varnish dispersions L-1 contain, in addition to a filler component F', a polymer binder B and a liquid carrier component T.

5. A process according to claims 1 and 4, characterised in that the varnish L-2 contains, in addition to the liquid carrier component T, at least one colourant FM.

6. A process according to claim 5, characterised in that the varnish L-2 also contains the binder B.

7. A process according to claims 4 to 6, characterised in that the polymer binders B are formed, either completely or partially, from a hardening system B-R containing at least two reactive components.

8. A process according to claims 4 to 7, characterised in that the polymer binders B comprise, apart from the hardening system B-R, a polymer binder B-P.

9. A process according to claim 8, characterised in that the polymer binder P-B is a homo- or copolymer of methyl methacrylate.

10. A process according to claims 1 and 4, characterised in that the liquid carrier component T has a boiling point under normal conditions in the range of from 50 - 200°C.

11. A process according to claim 10, characterised in that the liquid carrier component T has a boiling point under normal conditions in the range of from 75 - 170°C.

12. A process according to claims 1, 10 and 11, characterised in that the carrier component T consists, either completely or partially, of radically polymerisable monomers.

13. A process according to claim 12, characterised in that the carrier component T is comprised, either completely or partially, of one or more alkyl esters of (meth)acrylic acid having 1 to 6 carbon atoms in the alkyl group.

14. A process according to claim 12, characterised in that the carrier component T is comprised, either completely or partially, of methyl methacrylate.

## Revendications

1. Procédé de fabrication de pièces moulées de polymère en résines coulées, présentant une surface qui comporte des zones de différentes couleurs, une surface de l'outil de moulage étant enduite, avant son remplissage avec la résine de coulée, d'un revêtement durcissable d'une composition contenant un colorant, de telle sorte qu'il en résulte des différences de couleur,
caractérisé en ce que l'enduit est appliqué en au moins deux étapes de laquage sur les zones de la surface de l'outil prévues à cet effet, c'est-à-dire que, dans la première étape de laquage, une dispersion de laque L-1 contenant une charge sans addition de colorant est appliquée, que, dans la seconde étape de laquage, une laque L-2 dépourvue de charge et contenant un colorant est appliquée, qu'après le séchage des couches de laque, l'outil est rempli de la résine de coulée et la polymérisation est effectuée avec élévation de la température, et que la pièce est enfin démoulée.

2. Procédé selon la revendication 1, caractérisé en ce qu'à la suite du séchage de la laque L-2, il est appliqué, dans une troisième étape de laquage, une laque L-1' contenant une charge sans addition de colorant, et en ce qu'à la suite du séchage des couches de laque, l'outil est rempli de la résine de coulée et la polymérisation est effectuée avec élévation de température, et en ce que la pièce est enfin démoulée.

3. Procédé selon la revendication 2, caractérisé en ce que la laque L-1' contenant une charge correspond à la laque L-1.

4. Procédé selon la revendication 1 ou 3, caractérisé en ce que la dispersion de laque L-1 contenant une charge contient, en dehors du composant F' constituant la charge, un liant polymère B et un composant liquide T constituant un véhicule.

5. Procédé selon la revendication 1 ou 4, caractérisé en ce que la laque L-2 contient au moins un colorant FM en dehors du composant liquide T constituant un véhicule.

6. Procédé selon la revendication 5, caractérisé en ce que la laque L-2 contient en outre le liant B.

7. Procédé selon l'une quelconque des revendications 4 à 6, caractérisé en ce que le liant polymère B est constitué, en partie ou en totalité, par un système durcissant B-R, contenant au moins deux composants réactifs.

8. Procédé selon l'une quelconque des revendications 4 à 7, caractérisé en ce que le liant polymère B se compose, en dehors du système durcissant B-R, d'un liant polymère B-P.

9. Procédé selon la revendication 8, caractérisé en ce que le liant polymère P-B est un homo- ou un copolymère du méthacrylate de méthyle.

10. Procédé selon l'une ou l'autre des revendications 1 et 4, caractérisé en ce que le composant liquide T constituant le véhicule a un point d'ébullition, dans les conditions normales, dans la gamme de 50 à 200°C.

11. Procédé selon la revendication 10, caractérisé en ce que le composant liquide T constituant le véhicule a un point d'ébullition, dans les conditions normales, dans la gamme de 75 a 170°C.

12. Procédé selon les revendications 1, 10 et 11, caractérisé en ce que le composant T constituant le véhicule se compose, en totalité ou en partie, de monomères susceptibles de polymérisation radicalaire.

13. Procédé selon la revendication 12, caractérisé en ce que le composant T constituant le véhicule se compose, en totalité ou en partie, d'un ou de plusieurs esters alkyliques de l'acide (méth)acrylique à 1-6 atomes de carbone dans le reste alkyle.

14. Procédé selon la revendication 12, caractérisé en ce que le composant T constituant le véhicule se compose, en totalité ou en partie, de méthacrylate de méthyle.
